# FASCICULE DE BREVET EUROPEEN

(11) **EP 0 912 879 B1**
(45) Date de publication et mention de la délivrance du brevet: **11.12.2002**
(21) Numéro de dépôt: 97929043.4
(22) Date de dépôt: 03.07.1997
(51) Int. Cl.: G01M 3/28

(54) **PROCEDE DE SURVEILLANCE D'UN ECOULEMENT DE FLUIDE ET INSTALLATION POUR LA MISE EN OEUVRE DU PROCEDE**
ÜBERWACHUNGSVERFAHREN FÜR DIE STRÖMUNG EINER FLÜSSIGKEIT UND ÜBE DAZUGEHÖRIGE VORRICHTUNG
FLUID FLOW MONITORING METHOD AND DEVICE THEREFOR

(30) Priorité: 05.07.1996 BE 9600615
(43) Date de publication de la demande: 06.05.1999
(73) Titulaire: de Radigues, Hugues, 1480 Tubize (BE); Andre, Paul, 1480 Tubize (BE)
(72) Inventeur: ANDRE, Paul, B-1480 Tubize (BE)
(74) Mandataire: Powis de Tenbossche, Roland
(86) Numéro de dépôt international: BE9700076
(87) Numéro de publication internationale: WO98001734

(56) Documents cités:
- FR-A- 2 573 868
- FR-A- 2 690 525
- GB-A- 2 287 340

## Description

La présente invention concerne un procédé de surveillance d'un écoulement de fluide, notamment dans une arrivée d'eau potable d'un immeuble pour y détecter des pertes d'eau.

Des pertes de fluide, comme de l'eau potable dans une installation de distribution dans un immeuble ou comme d'autres fluides dans des installations industrielles, sont préjudiciables en premier lieu pour ceux qui ont à en supporter les coûts et le sont souvent également pour la société par exemple parce que le fluide perdu peut polluer l'atmosphère, occasionner des asphyxies, des risques d'explosion, etc., ou parce que, comme pour l'eau potable, il peut devenir rare. De toute façon il y a lieu de luttercontre legaspillage, que ce soit celui du fluide lui-même ou celui de la matière et/ou de l'énergie nécessaire pour produire le fluide, pour le transporter, pour le récupérer, pour l'épurer, pour le recycler, pour le mettre au rebut, etc.

Par exemple, des pertes dues à une chasse d'eau détériorée ou entartrée, à un robinet d'eau mal fermé ou dont le joint est usé, à un tuyau éclaté par le gel, etc., peuvent amener à des factures d'eau potable très importantes, surtout lorsque ces pertes ont lieu lors d'une absence prolongée du ou des occupants usuels de l'immeuble concerné ou de la partie concernée de celui-ci (vacances, hospitalisation,...). Il en est de même lorsque ces pertes sont difficiles à percevoir (fuite d'eau dans une canalisation passant dans un vide sanitaire situé dans un bâtiment, ou faible fuite d'une chasse d'eau, ou robinet mal fermé dans un local peu fréquenté,...).

Selon le document FR-A-2 690 525, en cas de constatation d'une persistance d'un débit d'eau au-delà d'un temps préselectionné, ce qui correspond à une fuite, une alarme est déclenchée.

L'invention a pour but de remédier à des inconvénients de ce genre et de procurer un procédé qui permet d'analyser l'écoulement avec des moyens simples et de détecter s'il est d'un genre normal c'est-à-dire, dans le cas de l'exemple ci-dessus, d'un débit soit nul soit fluctuant sans cesse au cours d'une période de temps choisie ou bien s'il existe un écoulement à débit anormalement constant dans le temps, signe d'une perte constante.

A cet effet, suivant l'invention, le procédé comprend :
- une première mesure du débit de l'écoulement à un premier moment donné,
- si la mesure résultante est supérieure à une valeur choisie, une mémorisation de la première mesure résultante et au moins une seconde mesure du débit à un second moment donné, et une comparaison de la seconde mesure résultante à celle mémorisée,
- si les mesures au premier et second moments diffèrent de plus que d'une tolérance déterminée, un arrêt du procédé et éventuellement au moins une répétition ultérieure de celui-ci,
- si les deux mesures résultantes comparées diffèrent de moins que de la tolérance déterminée, une signalisation du résultat de la comparaison et/ou une interruption de l'arrivée du fluide.

Il est à noter que, sauf indication contraire, les différences entre mesures à comparer sont prises en valeur absolue.

L'invention concerne également une installation pour la mise en oeuvre du procédé de l'invention.

Cette installation comprend avantageusement :
- des moyens de mesure de débit de l'écoulement de fluide à surveiller, comportant une sortie d'un signal de débit mesuré,
- des moyens de mémorisation de différentes mesures de débit, dont une entrée est reliée à la sortie des moyens de mesure pour en recevoir les mesures, comportant une sortie pour les mesures mémorisées, et
- des moyens de comparaison des différentes mesures, dont une entrée est reliée à la sortie des moyens de mémorisation et éventuellement à celle des moyens de mesure pour en recevoir les mesures à comparer, et comportant une sortie d'un signal en cas de différence inférieure à la tolérance déterminée,
- des moyens d'interruption de l'arrivée du fluide à surveiller, reliés à la sortie des moyens de comparaison afin d'en recevoir un éventuel signal pour commander l'interruption de l'écoulement du fluide, et
- des moyens de coordination reliés aux moyens de mémorisation, aux moyens de comparaison et éventuellement aux moyens de mesure et/ou aux moyens d'interruption pour coordonner leurs fonctionnements dans le temps.

Il va de soi que dans le présent document "relier" sous-entend usuellement "relier fonctionnellement" (de même "liaison" signifie "liaison fonctionnelle").

En particulier pour la mise en oeuvre du procédé de l'invention, il y a lieu d'avoir un capteur de débit fiable, dont les moyens de production de signaux de débit soient simples et légers à entraîner par l'écoulement du fluide.

D'autres détails et particularités de l'invention ressortiront des revendications secondaires et de la description des dessins qui sont annexés au présent mémoire et qui illustrent schématiquement, à titre d'exemples non limitatifs, une forme particulière du capteur de débit et d'installations précitées de l'invention, celles-ci servant à expliquer le procédé et l'utilisation du capteur de débit de l'invention.

La figure 1 représente schématiquement une installation de l'invention permettant la mise en oeuvre du procédé suivant l'invention.

La figure 2 représente schématiquement un capteur de débit de l'invention.

La figure 3 représente schématiquement un disque codé utilisé dans le capteur de débit de l'invention.

La figure 4 représente schématiquement une autre installation de l'invention comportant le capteur de débit de l'invention.

Dans les différentes figures, les mêmes notations de référence désignent des éléments identiques ou analogues.

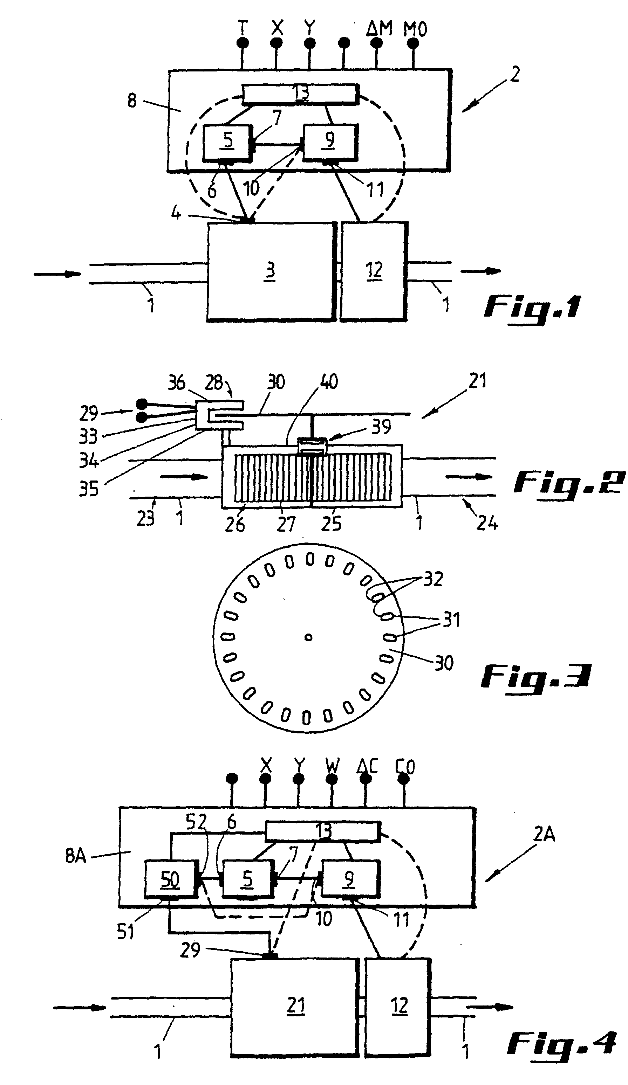

Le procédé de l'invention pour la surveillance d'un écoulement de fluide, notamment dans une canalisation 1 d'arrivée d'eau potable d'un immeuble pour y détecter des pertes ou fuites d'eau peut être mis en oeuvre au moyen d'une installation 2 représentée schématiquement à la figure 1. L'installation 2 et le procédé susdit peuvent servir alors à avertir qui de droit de l'existence de ces pertes et/ou à interrompre l'arrivée d'eau.

L'installation 2 peut comporter entre autres des moyens de mesure de débit 3 de l'écoulement de fluide à surveiller et ces moyens 3 comportent une sortie 4 d'un signal de débit mesuré. Des moyens 5 de mémorisation de différentes mesures de débit comportent une entrée 6, reliée à la sortie 4 des moyens de mesure 3 pour en recevoir les différentes mesures, et une sortie 7 pour les mesures mémorisées. Ces moyens 5 de mémorisation peuvent faire partie d'un microprocesseur 8. Des moyens de comparaison 9 des différentes mesures peuvent également faire partie du microprocesseur 8 et ont une entrée 10 reliée à la sortie 7 susdite, et éventuellement à la sortie 4 des moyens de mesure 3, afin d'en recevoir les mesures à comparer. Les moyens de comparaison 9 comportent une sortie 11 par laquelle ils peuvent délivrer un signal et à laquelle peuvent être reliés des moyens d'interruption 12 de l'arrivée du fluide à surveiller. Des moyens de coordination 13, qui peuvent également être compris dans le microprocesseur 8, sont reliés d'une façon connue de l'homme de métier aux moyens de mémorisation 5, à ceux de comparaison 9 et éventuellement à ceux d'interruption 12 et/ou à ceux de mesure 3 pour coordonner leurs fonctionnements dans le temps et ils comportent avantageusement des moyens dits d'horloge ou de rythme.

Dans le dessin de la figure 1 les moyens de mesure 3 ou "débitmètre" sont situés en amont des moyens d'interruption 12 ou "vanne d'arrêt" selon le sens de l'écoulement dans la canalisation 1. L'inverse peut être également réalisé. Des débitmètres 3 et vannes 12 utilisables à cet effet sont connus. Ces deux éléments peuvent éventuellement être agencés sous forme d'un ensemble formant une pièce et comportant éventuellement aussi les moyens 5, 9 et 13 ou le microprocesseur 8 qui rassemble ces derniers.

Le procédé susdit de l'invention comporte une première mesure M1 du débit de l'écoulement à un premier moment T1 donné. Si le débit mesuré (ou mesure résultante) M1 est supérieur à une valeur choisie M0, par exemple zéro pour le cas d'exemple choisi, on mémorise cette mesure M1 et une nouvelle mesure M2 du débit est effectuée à un second moment T2 ultérieur au précédent et elle est comparée à la mesure résultante M1. Si les débits mesurés M1 et M2 diffèrent de plus que d'une tolérance déterminée DM, le procédé peut être interrompu et éventuellement répété ultérieurement. Si les débits M2 et M1 comparés diffèrent de moins que de la tolérance DM, le procédé prévoit par exemple une signalisation du résultat de la comparaison à un individu qui peut agir parce que cela signifie qu'il y a un débit sensiblement constant assimilable à une fuite. Le procédé peut prévoir avantageusement, dans le cas de l'installation ci-dessus, éventuellement en plus de la signalisation susdite, une interruption automatique de l'arrivée du fluide au moyen de la vanne d'arrêt 12.

Si, lors de la comparaison précitée, les débits mesurés M1, M2 diffèrent de plus que de la tolérance DM, le procédé peut être (immédiatement) relancé automatiquement par les moyens de coordination 13. A cet effet, il peut y avoir alors deux nouvelles mesures M1, M2 en vue d'une nouvelle comparaison, et cela par exemple tant que la différence entre les deux mesures reste supérieure à la tolérance DM.

Suivant l'invention on peut également utiliser, pour la comparaison lors de la répétition ultérieure du procédé, la seconde mesure M2 mémorisée précédente comme nouvelle première mesure M1 et effectuer une nouvelle seconde mesure M2.

De préférence les premier et second moments T1 et T2 des deux mesures pour une comparaison sont directement consécutifs. Il peut en être de même pour le second moment T2 de la mesure M2 pour une comparaison et le premier moment T1 suivant de. ladite nouvelle première mesure M1 pour la comparaison de la répétition qui suivrait immédiatement.

Il apparaît ainsi qu'il n'est pas nécessaire de mémoriser de grandes quantités de mesures M. Deux à la fois peuvent suffire.

Dans le cas par exemple d'une distribution d'eau domestique, certaines utilisations (baignoire, douche, arrosage de jardin, machines à laver,...) de celle-ci peuvent donner lieu à un débit constant d'eau pendant un temps relativement long comme cela sera expliqué plus loin ci-dessous. Dans ce cas, le procédé de l'invention peut être organisé de façon à ce que si deux mesures M1, M2 comparées diffèrent de moins que de la tolérance DM déterminée, un nombre total déterminé W de mesures et comparaisons successives sont réalisées. Si jusqu'à la dernière comparaison la différence entre deux mesures comparées reste inférieure à ladite tolérance DM, alors seulement a lieu la signalisation et/ou l'interruption précitée. Par contre, si avant d'avoir atteint la dernière comparaison la différence entre deux mesures comparées devient supérieure à ladite tolérance DM, le procédé est arrêté et éventuellement répété ultérieurement.

Au cours de comparaisons, il peut être préféré en outre de vérifier si au moins deux mesures résultantes successives (de préférence consécutives) M1, M2, qui diffèrent de plus que de la tolérance DM vont en s'accroissant ou en décroissant. Si elles décroissent, le procédé de l'invention peut être organisé pour que toute mesure M1, M2 soit supprimée de la mémoire 5 et pour qu'alors la demière mesure ou une suivante puisse être mémorisée et utilisée comme première mesure M1 d'une nouvelle série. Dans ce cas on ne surveille que des débits constants ou croissants qui peuvent résulter de fuites dont le débit s'accroît dans le temps.

Pour la mise en oeuvre du procédé de l'invention, on peut faire appel à des débitmètres 3 qui donnent instantanément comme mesures des valeurs (analogiques) en rapport avec le débit du fluide. Cependant, les mesures M1, M2 peuvent consister en des comptages C1, C2 respectifs, pendant des périodes de temps X1, X2 de préférence égales en durée, d'impulsions électriques dont le nombre par unité de temps est proportionnel au débit de l'écoulement.

Le procédé peut être recommencé avantageusement à des moments prédéterminés, par exemple choisis parce qu'à ces moments il serait normal que le débit soit nul et parce qu'ainsi une perte ou fuite apparaîtrait davantage. Le procédé peut également être repris en permanence de façon successive et consécutive.

Les moyens de mesure 3 peuvent consister en un capteur de débit 21 représenté à la figure 2. Il est installé dans la canalisation 1 et peut être destiné notamment à la surveillance d'un écoulement de fluide dans cette canalisation 1 qui est, par exemple, reliée du côté amont 23 à l'arrivée d'eau potable et du côté aval 24 à un circuit d'utilisation d'eau potable d'un immeuble.

Le capteur de débit 21 comprend un corps creux 25, pour y canaliser l'écoulement venant du côté amont 23 de la canalisation 1 et allant vers le côté aval 24 de celle-ci, et des moyens 26, tels qu'une roue 27 à aubes ou de turbine ou bien un piston rotatif (non représenté). Ces moyens 26 sont entraînés en rotation par le fluide (l'eau dans cet exemple) à une vitesse de rotation proportionnelle au débit du fluide passant à travers le corps creux 25.

Le capteur de débit 21 comprend en outre, couplés aux moyens entraînés en rotation 26, des moyens 28 de production d'impulsions électriques dont le nombre par unité de temps est proportionnel au débit du fluide à travers le corps 25. Les moyens 28 présentent une sortie 29 pour les impulsions électriques produites.

Les moyens 28 de production d'impulsions électriques sont constitués avantageusement entre autres par un disque codé 30, entraîné en rotation par les moyens 26 et portant (figure 3) des marques 31 telles que des ouvertures 32 régulièrement réparties sur un tour du disque codé 30, et par un dispositif 33 de lecture des marques 31 tel qu'un dispositif photo-électrique 34 comportant, connus en soi, un émetteur de lumière 35 et un détecteur 36 de la lumière passant à travers les ouvertures 32. Le détecteur 36 présente alors la sortie 29 pour les impulsions électriques produites lors d'une rotation du disque codé 30.

Les moyens 28 de production d'impulsions électriques pourraient cependant comporter plutôt un disque codé 30 à pistes magnétisées interrompues et le dispositif de lecture 33 est alors choisi en conséquence.

L'accouplement en 39 entre les moyens 26 entraînés en rotation par le fluide et les moyens 28 de production d'impulsions électriques peut être magnétique, comme dans des compteurs d'eau à usage domestique connus.

Les moyens 28 de production d'impulsions électriques peuvent être disposés avantageusement en dehors du corps creux 25 proprement dit, à l'écart du fluide, et l'accouplement magnétique en 39 entre les moyens 26 entraînés en rotation par le fluide et les moyens 28 de production d'impulsions électriques est réalisé à travers une paroi 40, du corps creux 25, neutre par rapport au magnétisme de l'accouplement.

Une installation 2A (figure 4) pour la surveillance susdite à l'aide du capteur de débit 21 comprend par exemple, outre ce capteur 21,
- des moyens 50 de comptage d'impulsions, qui comportent une entrée 51 reliée à la sortie 29 du capteur 21 et une sortie 52 pour les comptes C1, C2 effectué pour chaque période X1, X2 à prendre en considération,
- des moyens de mémorisation 5 de différents comptes C1,..., dont une entrée 6 est reliée à la sortie 52 des moyens de comptage 50 pour en recevoir les comptes C1,..., et comportant une sortie 7 pour les comptes C1,... mémorisés,
- des moyens de comparaison 9 des différents comptes C1,..., dont une entrée 10 est reliée à la sortie 7 des moyens de mémorisation 5 et éventuellement à celle 52 des moyens de comptage 50 pour en recevoir les comptes à comparer, et comportant une sortie 11 d'un signal en cas de différence inférieure à une tolérance déterminée DC, au moins après la comparaison d'un compte C3 à au moins l'un des comptes C1, C2 précédents,
- des moyens d'interruption 12, ou vanne d'arrêt, de l'arrivée du fluide à surveiller, reliés à la sortie 11 des moyens de comparaison 9 pour en recevoir un éventuel signal afin de commander l'arrêt de l'écoulement du fluide, et
- des moyens de coordination 13 reliés aux moyens de comptage 50, aux moyens de mémorisation 5, aux moyens de comparaison 9 et éventuellement au capteur de débit 21 et/ou aux moyens d'interruption 12 pour coordonner leurs fonctionnements dans le temps.

Sauf indication contraire, les différences entre comptes à comparer sont prises en valeur absolue.

Un regroupement en un seul ensemble constitutif des éléments et moyens représentés dans la figure 4, tel que décrit dans le cas de l'installation destinée au procédé précité, peut être avantageux

Dans le cas d'une utilisation du capteur de débit 21, il y a bien sûr à installer le capteur 21 dans la canalisation 1 à surveiller (figure 4).

Il y a ensuite à réaliser l'installation 2A de la figure 4, c'est-à-dire à relier le capteur de débit 21 à une entrée 51 d'un microprocesseur 8A du genre représenté ci-dessus et à relier une sortie 11 de ce microprocesseur 8A à une vanne d'arrêt 12, également du genre décrit ci-dessus, installée dans la même canalisation 1. Il y a ensuite un premier comptage par le microprocesseur 8A des impulsions électriques produites par le capteur de débit 21 pendant une période de temps X1 qui peut être déterminée par le microprocesseur 8A. Le microprocesseur 8A peut être programmé pour comparer le compte C1 à une valeur déterminée C0 égale par exemple à zéro (débit nul). Si le compte obtenu C1 est supérieur à la valeur choisie C0, le microprocesseur 8A peut entreprendre les étapes suivantes d'un programme de fonctionnement. Le premier compte C1 est alors mémorisé en 5. Un nouveau comptage pendant une seconde période X2 ultérieure de préférence de même durée que la période X1 est effectué et le nouveau compte C2 ainsi obtenu est comparé au compte C1 mémorisé. Si les comptes C1 et C2 diffèrent de plus que d'une tolérance déterminée DC, le microprocesseur 8Apeut arrêter le processus de comptages et de comparaison ou éventuellement le répéter au moins une fois ultérieurement.

Si les comptes C1, C2 comparés diffèrent l'un de l'autre de moins que de la tolérance déterminée DC, le microprocesseur 8A peut envoyer un signal d'actionnement de la vanne d'arrêt 12 pour interrompre l'arrivée du fluide. Eventuellement une signalisation de ce fait à un préposé peut être prévue.

Comme dans le cas du procédé de l'invention, lors d'une répétition ultérieure des comptages et comparaison, on peut faire deux nouveaux comptages pour la nouvelle comparaison. On peut cependant utiliser le second compte C2 précédent comme nouveau premier compte C1 pour la nouvelle comparaison et donc effectuer alors un nouveau second compte C2 pour cette même comparaison.

Les première et seconde périodes X1, X2 peuvent être directement consécutives et également la seconde période d'une comparaison peut être immédiatement suivie par la nouvelle période X1 de comptage de la comparaison suivante.

Comme dans le cas des mesures M1 à M3 ci-dessus, il peut y avoir également une surveillance par le microprocesseur 8A de ce que deux comptes C1, C2 successifs s'accroissent ou décroissent et on peut utiliser le résultat d'une façon semblable à celle déjà décrite à ce sujet dans le procédé.

De plus, les comptages et comparaisons peuvent être avantageusement recommencés à des moments prédéterminés pour les mêmes raisons, ou pour d'autres, que celles citées à propos du procédé ci-dessus, ou bien ils peuvent être réalisés l'un après l'autre sans interruption pendant un temps donné.

Les tolérances DM et DC peuvent être choisies pour tenir compte entre autres de variations de pression du fluide considérées comme normales dans la canalisation 1 ou de faibles variations ou différences entre deux mesures ou comptages, dues aux appareils et/ou capteurs utilisés (frottement physique, temps de réponse, temps de scrutation,...).

Il doit être entendu que l'invention n'est nullement limitée aux formes de réalisation décrites et que bien des modifications peuvent être apportées à ces dernières sans sortir du cadre de la présente invention.

Ainsi, il va de soi que si les périodes de comptage ne sont pas de durées égales, pour faire une comparaison des comptes C1, C2 obtenus l'homme de métier incorporera une étape de calcul d'un compte moyen, en fonction de chaque durée différente de période, de façon à pouvoir faire alors la comparaison de ces comptes moyens.

La vanne d'arrêt 12 peut être d'un type à ressort, dont le ressort bandé et retenu par des moyens adéquats dans une position de départ est d'une force capable de fermer la vanne 12 dès la réception d'un signal provenant des moyens de comparaison 9 et commandant une libération du ressort pour provoquer une fermeture de la vanne. La vanne 12 pourrait être ouverte à nouveau à la main en bandant et retenant le ressort dans sa position de départ à l'aide desdits moyens adéquats.

Il doit être compris que la première mesure M1 ou le premier compte C1 peut ne servir qu'à la comparaison à la valeur choisie correspondante M0 ou respectivement C0 et qu'alors une mesure M2 ou compte C2 suivant n'est pas comparé à la mesure M1 ou respectivement au précédent C1 mais uniquement à une mesure ou respectivement un compte au suivant.

Selon les circonstances, l'alimentation électrique de l'installation 2, 2A peut être faite à partir d'un réseau électrique, de piles ou de batteries rechargeables ou à partir de n'importe quelle combinaison de ces sources de courant. Des problèmes de fonctionnement, comme des piles affaiblies en dessous d'un seuil donné, peuvent être indiqués par un fonctionnement automatique du microprocesseur 8, 8A qui commande par exemple un voyant et/ou envoie un signal de fermeture de la vanne 12.

Dans les figures 1 et 4, il est représenté à titre d'exemple des points de réglage respectifs, tels que pouvant servir pour le réglage,
- en T, des moments de mesure T1, T2 du des écarts entre des périodes de comptages X1, X2,
- en M0, de la valeur de base choisie,
- en DM, de la tolérance déterminée pour la comparaison des mesures M,
- en X, de la durée de chaque période de mesure, ,
- en W, d'un nombre de périodes de durée X égales et successives de comptage ou d'un nombre de moments T1 et T2,
- en C0, de la valeur de base choisie, et
- en DC, de la tolérance déterminée pour la comparaison des comptes C1, C2.

Par exemple, après avoir comparé les comptes C1 et C2 des deux périodes successives X1 et X2 égales et après avoir constaté que les comptes C1 et C2 diffèrent de moins que de la tolérance DC, le microprocesseur 8A peut cependant être agencé pour devoir continuer à compter les impulsions pour chaque période X suivante, pendant W périodes consécutives, et à comparer les comptes C, obtenus malgré que les différences entre deux comptes successifs restent inférieurs à DC. C'est le cas d'une distribution d'eau dans un immeuble, lors d'une utilisation précitée de celle-ci pour remplir une baignoire, pour prendre une douche, etc. : opérations qui durent un temps certain pendant lequel le débit est usuellement constant. Le microprocesseur 8, 8A pourrait déduire qu'il y a une perte ou fuite anormale si les comptes ou mesures qu'il traite sont faits pendant ce temps certain. En réglant alors le nombre W de périodes de durée X on peut arriver à faire des comptages qui ne tombent pas tous pendant ce temps certain et donc à éviter une mauvaise interprétation d'un débit constant connu.

Ainsi, si un remplissage d'une baignoire peut prendre par exemple moins de 50 minutes (temps certain), on pourrait régler X égal à 2 minutes et W égal à 40 de façon à ce que la surveillance porte sur un temps supérieur (X multiplié par W ou 2 x 40 = 80 minutes) au temps certain (50 minutes) et de façon à ce qu'une action ou fermeture de la vanne 12 ne soit programmée que si un débit constant est constaté au-delà de 80 minutes, ce qui peut être considéré comme anormal dans une installation domestique.

Si au cours du remplissage de la baignoire, un autre robinet est ouvert et ensuite refermé avant la fin de ce remplissage, une variation de débit sera constatée. Dans un cas, à l'ouverture de cet autre robinet, il peut être prévu que le procédé ou utilisation recommence à son point de départ. Dans un autre cas, il peut être prévu qu'à l'ouverture de l'autre robinet le procédé ou utilisation continue mais que, lors de la fermeture du robinet, le procédé ou utilisation soit recommencé à son point de départ de façon à mieux surveiller une éventuelle fuite qui s'accroît dans le temps.

Entre le disque codé 30 et les moyens entraînés 26, il peut y avoir selon le cas une démultiplication ou de surmultiplication pour adapter la vitesse de rotation du disque 30 au débit du fluide à surveiller et au type de moyens de production d'impulsions 28.

L'homme de métier pourra selon le cas, adapter l'invention pour la surveillance du gaz de ville ou en bonbonne, d'autres fluides industriels et même de consommation anormalement constante d'électricité, le capteur de débit de l'invention pouvant alors comporter, comme moyen 26 entraîné par le fluide, par exemple les moyens électro-magnétiques et le disque utilisés dans les compteurs d'électricité.

Le microprocesseur 8, 8A peut comporter des moyens mémorisant par exemple chaque fois les deux valeurs soit M1, M2 soit C1, C2 pour leur comparaison respective. Le microprocesseur 8, 8A peut cependant comporter une mémoire du type à registre à décalage de façon à renouveler chaque fois successivement pendant les W périodes précitées les valeurs de M1 et M2 (ou de C1 et C2) de départ et comparées, par :
- pour M1 (ou C1), la valeur M2 (ou C2) qui vient de servir à la dernière comparaison,
- pour M2 (ou C2), une nouvelle valeur mesurée (comptée) pour la comparaison suivante.

Cela peut être poursuivi pendant les W périodes X ou moments T, tant que ces valeurs comparées deux à deux ne diffèrent pas de plus que la tolérance DM ou DC respective. Cette dernière façon de faire permet par exemple de détecter des fuites dont le débit s'accroît dans le temps.

Il va de soi que sous l'appellation générale de microprocesseur 8, 8A, l'homme de métier comprendra entre autres autant une commande par "automate programmable" qu'une par circuit à relais câblés en conséquence.

Dans le cadre de l'invention, tant suivant le procédé que suivant l'utilisation du capteur de débit 21, le microprocesseur 8, 8A peut être programmé en outre comme suit pour la surveillance de l'écoulement de fluide, soit indépendamment soit en combinaison avec la surveillance de pertes ou fuites de fluide. Lorsque deux mesures M1, M2 ou comptes C1, C2 comparés diffèrent de plus que d'une tolérance respective Dm ou Dc, on vérifie en plus s'il y a accroissement (M2 > M1 ou C2 > C1) ou diminution (M2 < M1 ou C2 < C1) du débit dans le temps et l'on agit sur la pression du fluide surveillé dans un sens qui amène une diminution de la différence en valeur absolue obtenue pour la ou les comparaisons effectuées.

Les tolérances Dm et Dc peuvent être les mêmes que les tolérances DM et DC respectives ou bien être différentes (par exemple plus serrées) en particulier lorsque les deux types de surveillances sont faites ensemble par la même installation sur un même fluide. Ainsi, on peut amener l'installation 2, 2A à réaliser un respect d'un débit moyen du fluide dans la canalisation 1.

Dans le même cadre de l'invention, on peut en outre comparer les ou des mesures M1, M2 ou respectivement comptes C1, C2 à une mesure standard MS ou respectivement compte standard CS d'un débit souhaité du fluide et agir comme ci-dessus en fonction des différences constatées et de la tolérance Dm ou respectivement Dc. Ainsi, on peut amener l'installation 2, 2A à réaliser un débit donné du fluide dans la canalisation 1, à la tolérance Dm ou Dc près.

## Revendications

1. Procédé de surveillance d'un écoulement de fluide, notamment dans une arrivée d'eau potable d'un immeuble pour y détecter des pertes d'eau, **caractérisé en ce qu'**il comporte :
- une première mesure (M1) du débit de l'écoulement à un premier moment (T1) donné,
- si la mesure résultante (M1) est supérieure à une valeur choisie (M0), une mémorisation de la première mesure résultante (M1) et au moins une seconde mesure (M2) du débit à un second moment (T2) donné, et une comparaison de la seconde mesure résultante (M2) à celle mémorisée (M1),
- si les mesures (M1, M2) au premier et second moments (T1, T2) diffèrent de plus que d'une tolérance (DM) déterminée, un arrêt du procédé et éventuellement au moins une répétition ultérieure de celui-ci,
- si les deux mesures résultantes (M1, M2) comparées diffèrent de moins que de la tolérance (DM) déterminée, une signalisation du résultat de la comparaison et/ou une interruption de l'arrivée du fluide.

2. Procédé suivant la revendication 1, **caractérisé en ce qu'**en cas de répétition ultérieure du procédé, on effectue deux nouvelles mesures (M1 et M2) pour la nouvelle comparaison.

3. Procédé suivant la revendication 1, **caractérisé en ce qu'**en cas de répétition ultérieure du procédé, on utilise la seconde mesure (M2) susdite comme nouvelle première mesure (M1) dans la comparaison de ladite répétition, et l'on effectue une nouvelle seconde mesure (M2) pour cette même comparaison.

4. Procédé suivant l'une quelconque des revendications 1 à 3, **caractérisé en ce que** les premier et second moments (T1, T2) des mesures pour une comparaison sont directement consécutifs, le cas échéant également le second moment (T2) d'une mesure (M2) et le nouveau premier moment (T1) de ladite nouvelle mesure (M1) de la répétition qui suivrait immédiatement.

5. Procédé suivant l'une quelconque des revendications 2 à 4, **caractérisé en ce qu'**en cas de constat de ce que deux mesures (M1, M2) comparées diffèrent de moins que de la tolérance (DM) déterminée, un nombre total déterminé (W) de mesures et comparaisons successives sont réalisées et **en ce que**, si jusqu'à la dernière comparaison la différence entre deux mesures comparées reste inférieure à ladite tolérance (DM), alors a lieu la signalisation et/ou l'interruption précitée tandis que, si avant d'avoir atteint la dernière comparaison la différence entre deux mesures comparées devient supérieure à ladite tolérance (DM), le procédé est arrêté et éventuellement répété ultérieurement.

6. Procédé suivant l'une quelconque des revendications 1 à 5, **caractérisé en ce que**, lors de comparaisons précitées, il est vérifié en outre si au moins deux mesures résultantes (M1, M2) successives, qui diffèrent de plus que de la tolérance (DM) vont en s'accroissant ou en diminuant et **en ce qu'**en cas de diminution la ou les mesures précédentes sont supprimées, éventuellement la dernière mesure ou une suivante pouvant être mémorisée et utilisée comme nouvelle première mesure (M1).

7. Procédé suivant l'une quelconque des revendications 1 et 6, **caractérisé en ce que** les mesures (M1, M2) consistent chaque fois en un comptage, pendant des périodes (X1, X2) de temps égales, d'impulsions électriques dont le nombre par unité de temps est proportionnel au débit de l'écoulement.

8. Procédé suivant l'une quelconque des revendications 1 à 7, **caractérisé en ce qu'**il est recommencé à des moments prédéterminés.

9. Procédé suivant l'une quelconque des revendications 1 à 8, **caractérisé en ce que** lorsque deux mesures (M1, M2) comparées diffèrent de plus que d'une tolérance (Dm), on vérifie s'il y a accroissement ou diminution du débit dans le temps et on agit sur la pression du fluide surveillé de manière à diminuer la différence en valeur absolue obtenue lors de la ou des comparaisons.

10. Procédé suivant l'une quelconque des revendications 1 à 8, **caractérisé en ce qu'**en parallèle aux comparaisons des mesures (M1, M2) entre elles, on compare les mesures (M1, M2) à une mesure standard (MS) et **en ce que** lorsque la différence résultant de la comparaison est supérieure en valeur absolue à une tolérance (Dm), on vérifie s'il y a accroissement ou diminution du débit dans le temps et on agit sur la pression du fluide surveillé de manière à diminuer la différence en valeur absolue obtenue lors de la ou des comparaisons.

11. Procédé de surveillance d'un écoulement de fluide, notamment pour en régulariser le débit, **caractérisé en ce qu'**il comporte
- une mesure (M1, M2) du débit de l'écoulement à un moment donné (T1, T2),
- une comparaison de la mesure résultante (M1, M2) à une mesure standard (MS) d'un débit souhaité,
- si la différence résultant de la comparaison est supérieure en valeur absolue à une tolérance (Dm), une vérification de ce qu'il y a accroissement ou diminution du débit dans le temps et une action sur la pression du fluide surveillé de manière à diminuer ladite différence en valeur absolue obtenue lors de la ou des comparaisons,
- éventuellement une répétition des mesure(s) et comparaison(s).

12. Installation pour la mise en oeuvre du procédé suivant l'une quelconque des revendications 1 à 10, **caractérisée en ce qu'**elle comporte
- des moyens (3) de mesure de débit de l'écoulement de fluide à surveiller, comportant une sortie (4) d'un signal de débit mesuré,
- des moyens de mémorisation (5) de différentes mesures (M1, M2) de débit, dont une entrée (6) est reliée à la sortie (4) des moyens de mesure (3) pour en recevoir les mesures, et comportant une sortie (7) pour les mesures mémorisées,
- des moyens de comparaison (9) des différentes mesures (M1, M2) dont une entrée (10) est reliée à la sortie (7) des moyens de mémorisation (5) et éventuellement à celle (4) des moyens de mesure (3) pour en recevoir les mesures à comparer, et comportant une sortie (11) d'un signal en cas de différence inférieure à la tolérance déterminée (DM),
- des moyens d'interruption (12) de l'arrivée du fluide à surveiller, reliés à la sortie (11) des moyens de comparaison (9) pour en recevoir un éventuel signal pour commander l'interruption de l'écoulement du fluide, et
- des moyens de coordination (13) reliés fonctionnellement aux moyens de mémorisation (5), aux moyens de comparaison (9) et éventuellement aux moyens de mesure (3) et/ou aux moyens d'interruption (12) pour coordonner leurs fonctionnements dans le temps.

## Patentansprüche

1. Verfahren zur Überwachung eines Fluidstroms, insbesondere in einer Trinkwasserzufuhr in einer Immobilie, zur Erkennung von Wasserverlusten,
**dadurch gekennzeichnet, dass** es umfasst:
- eine erste Messung (M1) der Durchflussrate zu einem ersten gegebenen Zeitpunkt (T1),
- wenn die erhaltene Messung (M1) höher ist als ein gewählter Wert (M0), eine Speicherung der ersten erhaltenen Messung (M1) und mindestens eine zweite Messung (M2) der Durchflussrate zu einem zweiten gegebenen Zeitpunkt (T2) und ein Vergleich der zweiten erhaltenen Messung (M2) mit der gespeicherten (M1),
- wenn die Messungen (M1, M2) der ersten und zweiten Zeitpunkte (T1, T2) um mehr als eine bestimmte Toleranz (DM) differieren, erfolgt ein Stop des Verfahrens und eventuell mindestens eine weitere Wiederholung desselben,
- wenn die beiden erhaltenen Messungen (M1, M2) bei dem Vergleich um weniger als die bestimmte Toleranz (DM) differieren, erfolgt eine Anzeige des Ergebnisses des Vergleichs und/oder eine Unterbrechung der Fluidzufuhr.

2. Verfahren nach Anspruch 1, **dadurch gekennzeichnet, dass** im Falle einer weiteren Wiederholung des Verfahrens, zwei neue Messungen (M1 und M2) für einen neuen Vergleich vorgenommen werden.

3. Verfahren nach Anspruch 1, **dadurch gekennzeichnet, dass** im Falle einer weiteren Wiederholung des Verfahrens, die oben genannte zweite Messung (M2) als neue erste Messung (M1) im Vergleich der Wiederholung verwendet wird, und eine neue zweite Messung (M2) für diesen Vergleich vorgenommen wird.

4. Verfahren nach einem der Ansprüche 1 bis 3, **dadurch gekennzeichnet, dass** die ersten und zweiten Zeitpunkte (T1, T2) der Messungen für einen Vergleich direkt aufeinander folgen, gegebenenfalls gleichermaßen der zweite Zeitpunkt (T2) einer Messung (M2) und der neue erste Zeitpunkt (T1) der neuen Messung (M1) der Wiederholung, der unmittelbar darauf folgt.

5. Verfahren nach einem der Ansprüche 2 bis 4, **dadurch gekennzeichnet, dass** im Falle der Feststellung, dass zwei verglichene Messungen (M1, M2) um weniger als die bestimmte Toleranz (DM) differieren, eine bestimmte Gesamtzahl (W) an aufeinanderfolgenden Messungen und Vergleichen durchgeführt werden, und dadurch, dass, wenn bis zum letzten Vergleich die Differenz zwischen zwei verglichenen Messungen geringer bleibt als die Toleranz (DM), zuvor genannte Anzeige und/oder Unterbrechung stattfindet, wohingegen, wenn bevor der letzte Vergleich erreicht wurde, die Differenz zwischen zwei verglichenen Messungen größer wird als die Toleranz (DM), wird das Verfahren angehalten und eventuell später wiederholt.

6. Verfahren nach einem der Ansprüche 1 bis 5, **dadurch gekennzeichnet, dass** bei den zuvor genannten Vergleichen außerdem überprüft wird, ob mindestens zwei aufeinanderfolgende erhaltene Messungen (M1, M2), die um mehr als die Toleranz (DM) differieren, zunehmen oder abnehmen, und dadurch, dass im Falle der Abnahme die eine oder mehreren vorhergehenden Messungen unterdrückt werden, eventuell die letzte Messung oder eine folgende gespeichert werden und als neue erste Messung (M1) verwendet werden können.

7. Verfahren nach einem der Ansprüche 1 bis 6, **dadurch gekennzeichnet, dass** die Messungen (M1, M2) jedesmal aus einer Berechnung von elektrischen Impulsen, in Perioden (X1, X2) von gleichen Zeitabschnitten, bestehen, deren Anzahl pro Zeiteinheit proportional zur Durchflussrate ist.

8. Verfahren nach einem der Ansprüche 1 bis 7, **dadurch gekennzeichnet, dass** es zu bestimmten Zeitpunkten wiederaufgenommen wird.

9. Verfahren nach einem der Ansprüche 1 bis 8, **dadurch gekennzeichnet, dass**, wenn zwei verglichene Messungen (M1, M2) um mehr als eine Toleranz (Dm) differieren, überprüft wird, ob eine Zunahme oder Abnahme der Rate mit der Zeit vorliegt und es wird der überwachte Fluiddruck beeinflusst, in der Art, dass die Differenz des erhaltenen Absolutwerts bei dem einen oder mehreren Vergleichen abnimmt.

10. Verfahren nach einem der Ansprüche 1 bis 8, **dadurch gekennzeichnet, dass** parallel zu den Vergleichen der Messungen (M1, M2) miteinander, die Messungen (M1, M2) mit einer Standardmessung (MS) verglichen werden und dadurch, dass, wenn eine aus dem Vergleich erhaltene Differenz im Absolutwert größer ist als eine Toleranz (Dm), überprüft wird, ob eine Zunahme oder Abnahme der Rate mit der Zeit vorliegt und es wird der überwachte Fluiddruck beeinflusst, in der Art, dass die Differenz des erhaltenen Absolutwerts bei dem einen oder mehreren Vergleichen abnimmt.

11. Verfahren zur Überwachung eines Fluidstroms, insbesondere um dabei die Rate zu regulieren, **dadurch gekennzeichnet, dass** es umfasst:
- eine Messung (M1, M2) der Durchflussrate zu einem gegebenen Zeitpunkt (T1, T2),
- einen Vergleich der erhaltenen Messung (M1, M2) mit einer Standardmessung (MS) einer gewünschten Rate,
- wenn die erhaltene Differenz aus dem Vergleich im Absolutwert größer ist als eine Toleranz (Dm), eine Überprüfung, ob eine Zunahme oder Abnahme der Rate mit der Zeit vorliegt und eine Einwirkung auf den überwachten Fluiddruck, in der Art, dass die Differenz des bei dem einen oder mehreren Vergleichen erhaltenen Absolutwerts abnimmt,
- eventuell eine Wiederholung von Messung(en) und Vergleich(en).

12. Einrichtung zur Ausführung des Verfahrens nach einem der Ansprüche 1 bis 10, **dadurch gekennzeichnet, dass** sie umfasst:
- Mittel (3) zum Messen der Durchflussrate des zu überwachenden Fluids, umfassend einen Ausgang (4) eines Signals der gemessenen Rate,
- Speichermittel (5) verschiedener Messungen (M1, M2) der Rate, deren einer Eingang (6) mit dem Ausgang (4) der Messmittel (3) verbunden ist, um die Messungen zu empfangen und umfassend einen Ausgang (7) für die gespeicherten Messungen,
- Vergleichsmittel (9) der verschiedenen Messungen (M1, M2), deren einer Eingang (10) mit dem Ausgang (7) der Speichermittel (5) verbunden ist und eventuell mit dem (4) der Messmittel (3), um zu vergleichende Messungen zu empfangen, und umfassend einen Ausgang (11) eines Signals, für den Fall, dass die Differenz geringer ist als die bestimmte Toleranz (DM),
- Unterbrechungsmittel (12) der Zufuhr des zu überwachenden Fluids, verbunden mit dem Ausgang (11) der Vergleichsmittel (9), um ein eventuelles Signal zum Befehlen der Unterbrechung der Fluidströmung zu empfangen, und
- Koordinationsmittel (13), die funktionell mit Speichermitteln (5), Vergleichsmitteln (9) und eventuell Messmitteln (3) und/oder mit Unterbrechungsmitteln (12) verbunden sind, um ihre Funktionen mit der Zeit zu koordinieren.

## Claims

1. Process for monitoring a fluid flow, in particular in a drinking water supply pipe for a building, in order to detect water losses, **characterized in that** it comprises:
- a first measurement (M1) of the flow rate at a first given time (T1),
- if the resulting measurement (M1) is greater than the value chosen (MO), the resulting first measurement (M1) and at least a second measurement (M2) of the flow rate at a second given time (T2) are stored, and comparison of the resulting second measurement (M2) with the stored measurement (M1) is carried out,
- if the measurements (M1, M2) at the first and second times (T1, T2) differ by more than a specified tolerance (DM), the process is stopped and optionally later repeated at least once,
- if the two compared resulting measurements (M1, M2) differ by less than the determined tolerance (DM), the result of the comparison is reported and/or the fluid supply is cut off.

2. Process according to claim 1, **characterized in that**, in the event of the process being later repeated, two new measurements (M1 and M2) are made for the new comparison.

3. Process according to claim 1, **characterized in that**, in the event of the process being later repeated, the aforementioned second measurement (M2) is used as a new first measurement (M1) in the comparison of said repetition, and a new second measurement (M2) is made for this same comparison.

4. Process according to any one of claims 1 to 3, **characterized in that** the first and second times (T1, T2) of the measurements for a comparison are directly consecutive, where appropriate also the second time (T2) of a measurement (M2) and the new first time (T1) of said new measurement (M1) of the repetition which would immediately follow.

5. Process according to any one of claims 2 to 4, **characterized in that**, if it is observed that two compared measurements (M1, M2) differ by less than the determined tolerance (DM), a total determined number (W) of successive measurements and comparisons is carried out and **in that**, if up to the last comparison the difference between two compared measurements remains lower than said tolerance (DM), then the aforementioned reporting and/or cutting off occurs, whereas, if before reaching the last comparison, the difference between two compared measurements becomes greater than said tolerance (DM), the process is stopped and optionally later repeated.

6. Process according to any one of claims 1 to 5, **characterized in that**, during the aforementioned comparisons, it is further checked whether at least two successive resulting measurements (M1, M2), which differ by more than the tolerance (DM) are increasing or decreasing and, if they are decreasing, the previous measurement(s) is/are deleted, the last measurement or a later measurement optionally being able to be stored and used as a new first measurement (M1).

7. Process according to any one of claims 1 and 6, **characterized in that** the measurements (M1, M2) consist each time of counting, for equal periods of time (X1, X2), electric pulses the number per unit time of which is proportional to the flow rate.

8. Process according to any one of claims 1 to 7, **characterized in that** it is restarted at predetermined times.

9. Process according to any one of claims 1 to 8, **characterized in that**, when two compared measurements (M1, M2) differ by more than a tolerance (Dm), it is checked as to whether the flow rate increases or decreases over time, and action is taken on the monitored fluid pressure in order to reduce the difference in absolute value obtained during the comparison(s).

10. Process according to any one of claims 1 to 8, **characterized in that**, in parallel with the comparisons of the measurements (M1, M2) with each other, the measurements (M1, M2) are compared with a standard measurement (MS) and **in that**, when the difference resulting from the comparison is greater in absolute value than a tolerance (Dm), it is checked as to whether the flow rate increases or decreases over time, and action is taken on the monitored fluid pressure in order to reduce the difference in absolute value obtained during the comparison(s).

11. Process for monitoring a fluid flow, in particular in order to regulate its flow rate, **characterized in that** it comprises:
- a measurement (M1, M2) of the flow rate at a given time (T1, T2),
- comparison of the resulting measurement (M1, M2) with a standard measurement (MS) of a desired flow rate,
- if the difference resulting from the comparison is greater in absolute value than the tolerance (Dm), it is checked as to whether the flow rate increases or decreases over time and action is taken on the monitored fluid pressure in order to reduce said difference in absolute value obtained during the comparison(s),
- optionally a repetition of the measurement(s) and comparison(s).

12. Installation for the implementation of the process according to any one of claims 1 to 10, **characterized in that** it comprises:
- means (3) for measuring the flow rate of the fluid to be monitored, comprising an output (4) for a measured flow rate signal,
- means (5) for storing the different flow rate measurements (M1, M2), one input (6) of which is connected to the output (4) of the measurement means (3) in order to receive the measurements, and comprising an output (7) for the stored measurements,
- means (9) for comparing the different measurements (M1, M2) one input (10) of which is connected to the output (7) of the storage means (5) and optionally to that (4) of the measurement means (3) in order to receive its measurements for comparison, and comprising an output (11) for a signal in the event of a difference which is lower than the determined tolerance (DM),
- means (12) for interrupting the supply of the fluid to be monitored, connected to the outlet (11) of the comparison means (9) in order to receive from the latter an optional signal ordering the fluid flow to be cut off, and
- co-ordination means (13) functionally connected to the storage means (5), to the comparison means (9) and optionally to the measurement means (3) and/or the interruption means (12) in order to co-ordinate their operation over time.
